(19) Europäisches Patentamt
European Patent Office
Office européen des brevets

(11) **EP 1 641 874 B1**

(12) **EUROPEAN PATENT SPECIFICATION**

(45) Date of publication and mention
of the grant of the patent:
**11.09.2019  Bulletin 2019/37**

(51) Int Cl.:
**C08K 9/04** *(2006.01)*       **C09C 3/08** *(2006.01)*

(21) Application number: **04743140.8**

(22) Date of filing: **30.06.2004**

(86) International application number:
**PCT/GB2004/002792**

(87) International publication number:
**WO 2005/003224 (13.01.2005 Gazette 2005/02)**

(54) **PARTICULATE CLAY MATERIALS AND POLYMER COMPOSITIONS INCORPORATING THE SAME**

TEILCHENFÖRMIGE TONMATERIALIEN UND POLYMERZUSAMMENSETZUNGEN, DIE DIESE ENTHALTEN

MATERIAUX D'ARGILE PARTICULAIRES ET COMPOSITIONS POLYMERES LES COMPRENANT

(84) Designated Contracting States:
**AT BE BG CH CY CZ DE DK EE ES FI FR GB GR HU IE IT LI LU MC NL PL PT RO SE SI SK TR**

(30) Priority: **01.07.2003  GB 0315409**

(43) Date of publication of application:
**05.04.2006   Bulletin 2006/14**

(73) Proprietor: **IMERTECH SAS**
**75015 Paris (FR)**

(72) Inventors:
• **GOODMAN, Howard**
**Cornwall TR2 5RN (GB)**
• **LEGRIX, Anabelle Huguette Renee**
**Cornwall PL26 7QL (GB)**

(74) Representative: **Rushton, David John**
**Haseltine Lake Kempner LLP**
**Redcliff Quay**
**120 Redcliff Street**
**Bristol BS1 6HU (GB)**

(56) References cited:
**WO-A-88/00608      GB-A- 1 251 277**
**US-A- 3 628 738**

## Description

### Field of the Invention

The present invention relates to particulate clay materials and more especially to particulate clay materials suitable for use as fillers in polymer compositions. The invention also relates to novel polymer compositions incorporating the particulate clay materials, to process intermediates from which such compositions may be formed and to articles made from the compositions. The invention also relates to the use of particulate clay materials as flame retardants in a thermoplastic resin.

### Background of the Invention

Flame retardant polymer compositions are widely used, particularly in locations where there is a risk of high temperatures and/or fire, or where the consequences of burning of the polymer composition would be catastrophic. For example, the sheathing or coating of electrical cables must meet legally specified flame retardancy standards, to limit the risk of failure of electrical systems in the event of a fire and to limit the risk of a fire being started or spread as a result of overheating of the cable by the electric current. The cable sheathing or coating will be rated to withstand a specified temperature.

Generally speaking, flame retardant polymer compositions include additives which can have one or more of the following effects on exposure of the composition to fire: (i) char promotion, in which the combusted composition forms a solid mass ("char"), which provides an insulating layer against the fire heat, inhibiting escape of volatile combustible materials from the composition and inhibiting inward diffusion of oxygen; (ii) imparting drip resistance, in which the tendency of a thermoplastic polymer to drip when heated is reduced; (iii) promotion of heat absorption, in which the additive removes heat from the system; and (iv) promotion of heat quenching, in which the additive inhibits combustion in the gas phase by interfering with the chemical reactions which spread and maintain a flame.

Known char forming additives include phosphorus-containing compounds, boron-containing compounds and metal salts such as alkali metal salts of sulphur-containing compounds, which can fuse and solidify at flame temperatures, thereby creating a ceramic-like or glass-like mass which structurally supports the char.

Known drip suppressing additives for thermoplastic polymers include polytetrafluoroethylene (PTFE). The PTFE is typically present at an amount of up to about 5% by weight of the total composition, and forms fibrils which stabilise the thermoplastic polymer under molten conditions. See, for example, WO-A-99/43747 and the prior publications referred to therein and in the search report thereon.

Known heat absorbing additives include metal hydroxides or hydrates such as alumina trihydrate (ATH; $Al(OH)_3$) or magnesium hydroxide ($Mg(OH)_2$). These additives are believed to work by absorbing heat to evaporate water contained in their structure.

Known heat quenching (flaming resistance) additives include free radical scavengers such as organic halogen-containing compounds such as brominated and chlorinated hydrocarbons. These additives are believed to work by releasing halogens into the flame, which inhibit combustion of the gas phase. Synergistic co-additives such as antimony oxide may be present, to enhance the heat quenching effects of the free radical scavengers. See, for example, US Patent No. 4582866 and the prior publications referred to therein and in the search report thereon.

The known additives are not entirely satisfactory, however, and the need for alternative and improved additives remains. For example, additives such as PTFE can adversely affect the surface finish of the composition. The use of halogen-containing compounds is believed to cause health problems and environmental damage. The additives can also adversely affect impact strength and impact resistance of the composition, or other physical properties. At the same time, cost pressures can urge that the level of additive used is as low as possible.

Proposals have been made to include certain clays as flame retardant additives in polymer compositions, in an attempt to answer some of these difficulties. US Patent No. 5946309 describes generally a coarse particle size kaolin clay product having an average equivalent particle diameter of about 4.5 to 6.0 microns ($\mu$m) as measured using a Micromeritics Sedigraph 5100 unit, and a BET surface area of about 8 to 11 $m^2$/g, and its use as a filler for flame retardant and other polymeric compositions.

US Patent No. 4960816 describes certain particulate kaolin clay products in which the surfaces of the kaolin particles have certain amide polymers associated therewith, and suggests the use of such materials as fillers for polymeric compositions. WO 88/00608 A1, GB 1 251 277 A, and US 3 628 738 A disclose surface-modified particulate clay materials and their incorporation in a polymeric material. EP 1 090 954 A1 discloses organoclay/polymer compositions with flame retardant properties.

The present invention is based on the surprising finding that, by using in a polymer composition a novel particulate clay filler which is surface-modified by treatment with at least one organic compound having an organic portion and a basic portion, a useful degree of flame resistance can be obtained in conjunction with generally desirable physical properties of the polymer composition.

## Brief Description of the Invention

The present invention is defined in and by the appended claims. According to the present invention in a first aspect, there is provided the use of particulate clay material as a flame retardant in a thermoplastic resin to improve the flame resistance of the thermoplastic resin in comparison with the thermoplastic resin filled with the corresponding unmodified clay material, wherein the clay material is surface-modified with at least one organic compound comprising an organic portion and a basic portion having a particle shape factor which is greater than 10, wherein the shape factor is measured as described hereinafter and wherein the particulate clay material has a mean equivalent particle diameter less than or equal to 4 microns ($\mu$m), measured by sedimentation of the particulate material in an aqueous medium using a Sedigraph 5100 machine.

The term "surface-modified" used herein is to be understood broadly, and is not limited, for example, to uniform coatings or to coatings which cover the entire surface area of a particle. Particles in which discrete regions of the surface are modified with the organic compound, and in which areas of the surface are associated with discrete molecules of the organic compound, will be understood as being surface-modified within the terms of the present invention.

The organic compound may suitably be present in an amount of between about 0.1 and about 5 wt% based on the dry weight of the particulate clay material, more preferably between about 0.5 and about 2 wt%, e.g. about 1 wt%.

The organic compound may be polymeric or non-polymeric. The organic compound may optionally include at least one functional group associated with the organic portion, more particularly at least one functional group which can interact with a polymer or other material to be filled using the particulate clay material of the present invention.

Without wishing to be bound by theory, it is believed that the basic portion of the organic compound serves in use to anchor the compound directly to the surface of a clay particle by direct acid/base interaction with an acidic site on the clay particle, including, for example, aluminium atoms with broken bonds. It is therefore preferred that the organic compound will have sufficient basic character to provide an effective acid/base interaction with acidic aluminium sites on the surface of the particle.

It is preferred that the particulate clay material is in the form of substantially dry particles. These substantially dry particles are preferably present in the substantial absence of particles of the organic compound(s). The population of particles may consist essentially of the surface-modified clay according to the first aspect of the present invention, or may be in admixture with other desired particulate ingredients, as described in more detail below. Such forms are particularly suitable for addition to an organic material to be filled.

The particulate clay material has a mean equivalent particle diameter less than or equal to about 4 microns ($\mu$m), and a particle shape factor which is greater than about 10, and preferably up to about 150.

According to the present invention in a second aspect there is provided a particulate clay material which is surface modified with at least one organic compound comprising an organic portion and a basic portion having a particle shape factor which is greater than 20, wherein the shape factor is measured as described hereinafter and wherein the particulate clay material has a mean equivalent particle diameter less than or equal to 4 microns ($\mu$m), measured by sedimentation of the particulate material in an aqueous medium using a Sedigraph 5100 machine.

According to the present invention in a third aspect, there is provided a method of preparing a particulate clay material according to the second aspect of the invention, comprising contacting a particulate clay material which is not surface-modified with the organic compound or compounds with a sufficient quantity of the organic compound or compounds under conditions whereby the said organic compound or compounds associate with the clay particles to surface-modify the same.

According to the present invention in a fourth aspect, there is provided a polymer composition comprising a polymer and a particulate clay filler distributed in the polymer composition, wherein the particulate clay filler is a particulate clay material according to the second aspect of the invention. The polymer composition is suitably a flame retardant polymer composition.

The polymer composition may suitably include one or more further components, which may be selected from one or more conventional flame retardant component, one or more conventional non-flame retardant component, or both. Any such further components will suitably be present in a smaller weight proportion than the essential components of the composition. The essential components of the composition preferably constitute the majority (i.e. over half) of the weight of the composition.

The conventional flame retardant component, when present, may, for example, be selected from phosphorus-containing compounds, boron-containing compounds, metal salts, metal hydroxides, metal oxides, hydrates thereof, organoclays (including ion-exchanged and any other modified organoclays), halogenated hydrocarbons, and any combination thereof, typically boric acid, a metal borate and any combination thereof. A preferred flame retardant component is ATH.

The conventional non-flame retardant component, when present, may, for example, be selected from pigments, colorants, anti-degradants, anti-oxidants, impact modifiers, inert fillers, slip agents, antistatic agents, mineral oils, stabilisers, flow enhancers, mould release agents, nucleating agents, clarifying agents and any combination thereof.

According to the present invention in a fifth aspect, there is provided a particulate filler for a flame retardant polymer composition, the filler comprising a mixture of a particulate clay and one or more further particulate flame retardant (for example, ATH), wherein the particulate clay is a surface-modified particulate clay material according to the second aspect of the invention.

For processing to form the polymer composition, the components will preferably be mixed, the polymer component being present as liquid or particulate solid, optionally as one or more precursors of the polymer component. Where one or more precursors of the polymer component are used, the mixture will typically then be cured, optionally after further conventional processing steps, to provide the polymer composition. Such a process and the resultant mixture constitute respectively sixth and seventh aspects of the present invention.

According to the present invention in an eighth aspect, there is provided an article, for example an electrical product or other article comprising a sheath, coating or housing, formed from a flame retardant polymer composition according to the fourth aspect of the present invention.

## Detailed Description of the Invention

*Particulate Clay*

The particulate clay may comprise hydrous kaolin, partially calcined kaolin (metakaolin), fully calcined kaolin, ball clay, talc, mica or any combination thereof. The kaolin clay is preferably a hydrous kaolin. Mixtures of different clays may be used, provided that the particulate clay has the required mean equivalent particle diameter and the required shape factor.

A kaolin product of high shape factor is considered to be more "platey" than a kaolin product of low shape factor. "Shape factor" as used herein is a measure of an average value (on a weight average basis) of the ratio of mean particle diameter to particle thickness for a population of particles of varying size and shape as measured using the electrical conductivity method and apparatus described in GB-A-2240398/US-A-5128606/EP-A-0528078 and using the equations derived in these patent specifications. "Mean particle diameter" is defined as the diameter of a circle which has the same area as the largest face of the particle. In the measurement method described in EP-A-0528078 the electrical conductivity of a fully dispersed aqueous suspension of the particles under test is caused to flow through an elongated tube. Measurements of the electrical conductivity are taken between (a) a pair of electrodes separated from one another along the longitudinal axis of the tube, and (b) a pair of electrodes separated from one another across the transverse width of the tube, and using the difference between the two conductivity measurements the shape factor of the particulate material under test is determined.

Incidentally, the "aspect ratio" parameter of the kaolin clay product of the prior art US Patent No. 5946309 is not numerically the same as the "shape factor" parameter of the kaolin used in the present invention. For example, for one clay which we have tested, it is found experimentally that an "aspect ratio" of 9 according to the prior art determination corresponds to a "shape factor" according to the present invention of about $65 \pm 5$.

The mean (average) equivalent particle diameter ($d_{50}$ value) and other particle size properties referred to herein for the particulate clay are as measured in a well known manner by sedimentation of the particulate material in a fully dispersed condition in an aqueous medium using a Sedigraph 5100 machine as supplied by Micromeritics Instruments Corporation, Norcross, Georgia, USA (telephone: +1 770 662 3620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (esd), less than given esd values. The mean particle size $d_{50}$ is the value determined in this way of the particle esd at which there are 50% by weight of the particles which have an equivalent spherical diameter less than that $d_{50}$ value.

The particulate clay of the present invention has a mean equivalent particle diameter ($d_{50}$) less than or equal to about 4 microns ($\mu$m) (by Sedigraph), particularly less than $4.0\mu$m, e.g. less than about $3\mu$m, and a particle shape factor which is greater than about 10, e.g. greater than about 20, and preferably up to about 150.

The value of $d_{50}$ may, for example, be in the range of about $0.1\mu$m to about $3\mu$m, for example about $0.1\mu$m to about $2\mu$m.

In the case of particulate clays present in the polymer composition at a relatively high number of particles per unit volume, the value of $d_{50}$ will generally be relatively low, to provide the required particle number. In embodiments of the polymer composition of the present invention, for example, the particle number per unit volume is at least about 2 particles per 100 $\mu$m$^3$, for example at least about 5 particles per 100 $\mu$m$^3$ or at least about 10 particles per 100 $\mu$m$^3$. Normally, in compositions of this aspect of the invention, the particle number per unit volume in the polymer composition will be no greater than about 10,000 particles per 100 $\mu$m$^3$.

The clay filler is suitably present in the polymer composition according to the present invention at amounts in the general loading range between about 5 and about 200 parts by weight per hundred of polymer, for example between about 5 and about 100 parts by weight per hundred of polymer and more preferably between about 10 and about 50 parts per hundred, for example about 20 to 40 parts by weight per hundred of polymer.

*Organic Compound*

The organic portion of the compound may suitably comprise (or more preferably may consist essentially of) a straight or branched chain alkyl group having at least 8 carbon atoms, for example between 8 and 24 carbon atoms, such as, for example, a $C_{13}$, $C_{14}$, $C_{15}$, $C_{16}$, $C_{17}$, $C_{18}$, $C_{19}$, $C_{20}$, $C_{21}$, $C_{22}$ or $C_{23}$ alkyl group. Alternatively, the organic portion may comprise (or more preferably consist essentially of) one or more cyclic organic groups, which may be saturated, unsaturated or aromatic, and may optionally include one or more heteroatoms, for example selected from O, N and S. The cyclic organic group may, for example, include at least one six-membered ring. The organic portion of the compound may include one or more substituent groups, such as, for example, functional groups which can favourably interact with a polymeric or other material to be filled using the surface-modified clay particles. The interaction may, for example, involve covalent bonding, cross-linking, hydrogen bonding, chain entanglement or ionic interaction. Suitable functional substituent groups include, for example, polar or non-polar groups, and hydrophobic or hydrophilic groups. Examples of such groups include amide or polyamide groups (which can favourably interact with polyamides such as nylon), carboxyl groups, vinyl groups (which can favourably interact with natural or synthetic rubbers), mercapto or other sulphur-containing groups (which can favourably interact with natural or synthetic rubbers), or alkylamino groups such as ethylamino or propylamino groups.

The basic portion of the compound comprises any group which is capable of associating with the acid sites of the clay particles. The basic portion may, for example, include at least one primary, secondary or tertiary amine group. The basic portion of the organic compound preferably comprises one or more primary amine group $NH_2$. At least some of the basic portions may react with protons at the surface of the clay particles to form ammonium ions which may in turn exchange with cations such as calcium and/or sodium at the clay surface.

The organic compound may be monomeric or polymeric. The term "polymeric" includes homopolymers and copolymers.

The organic compound may, for example, be selected from alkyl mono-amines containing between 8 and 24 carbon atoms in a straight or branched alkyl portion (e.g. hydrogenated-tallowalkyl-amine), organic polyamines, and cyclic mono- or poly-amines including at least one cyclic ring system having at least 6 atoms comprising the ring (e.g. melamine). These compounds may optionally carry further functional substituents on the organic portion, as described above.

The surface-modified particulate clay material of the present invention is preferably obtained by contacting a particulate clay having the desired particle size distribution and shape factor with the organic compound under conditions whereby the compound will associate with the surface of the clay particles. The particulate starting material may be uncoated (not surface-modified) or may be surface-modified with one or more different compounds which do not prevent the desired degree of association between the organic compound and the particles in accordance with the present invention. The organic compound may suitably be intimately admixed with the particles of the clay to obtain optimum contact between the materials. The organic compound may be used in the form of solid particles (e.g. prills) or may be entrained in a suitable solvent for the coating process. The coating process may suitably be carried out at an elevated temperature.

The particulate clay material for use in the method of preparing the surface-modified material according to the invention may be prepared by light comminution, e.g. grinding or milling, of a coarse clay (e.g. a coarse kaolin) to give suitable delamination thereof. The comminution may be carried out by use of beads or granules of a plastics, e.g. nylon, grinding or milling aid. The coarse clay may be refined to remove impurities and improve physical properties using well known procedures. The clay mineral may be treated by a known particle size classification procedure, e.g. screening and/or centrifuging, to obtain particles having a desired $d_{50}$ value.

A range of particulate clay materials are available, which have the required particle size and shape factor, or can easily be processed in ways well known to the skilled worker to arrive at the required particle size and shape factor.

*Polymer*

The polymer to be filled in accordance with the present invention comprises any natural or synthetic polymer or mixture thereof. The polymer may, for example, be thermoplastic or thermoset. The term "polymer" used herein includes homopolymers and copolymers, as well as crosslinked and/or entangled polymers and elastomers such as natural or synthetic rubbers and mixtures thereof. Specific examples of suitable polymers include, but are not limited to, polyolefins of any density such as polyethylene and polypropylene, polycarbonate, polystyrene, polyester, acrylonitrile-butadiene-styrene copolymer, nylons, polyurethane, ethylene-vinylacetate polymers, and any mixture thereof, whether cross-linked or un-cross-linked.

The term "precursor" as applied to the polymer component will be readily understood by one of ordinary skill in the art. For example, suitable precursors may include one or more of: monomers, cross-linking agents, curing systems comprising cross-linking agents and promoters, or any combination thereof. Where according to the invention the particulate clay material is mixed with precursors of the polymer, the polymer composition will subsequently be formed by curing and/or polymerising the precursor components to form the desired polymer.

The particulate clay material may suitably be present in the polymer composition at a particle number per unit volume of at least about 1 particle per 100 $\mu m^3$.

The parameter of particle number per unit volume (referred to herein as $N_{per\ unit\ volume}$ or $N_{puv}$) of the particulate clay filler when present in the filled polymer composition is calculated from the $d_{50}$ of the clay by Sedigraph (d) and the volume fraction of the clay in the polymer composition ($\phi$), according to the following relationship:

$$N_{puv} = \frac{6}{\pi} \frac{\phi}{d^3}$$

Here, d, measured by the Sedigraph is related to both the average diameter of the clay (mineral) disk or platelet (D) and the shape factor *NSF* as follows:

$$d = D\sqrt{\frac{3}{2} \frac{\arctan NSF}{NSF}}$$

(see Jennings et al, Particle size measurement: the equivalent spherical diameter, Proc. R. Soc. Lond., A419, 137-149,1988).

*Flame Retarding Component*

As stated above, the polymer composition according to the present invention may suitably contain one or more further flame retarding components. Such components may, for example, be selected from one or more of the following:

(i) One or more char promoter;
(ii) One or more drip suppressant;
(iii) One or more heat absorber; and
(iv) One or more heat quencher (ignition suppressant).

Any conventional such components may be used, as will be apparent to one of ordinary skill in this art. Examples of such components include:

Char promoters and drip suppressants

Phosphorus-containing compounds (e.g. organophosphates or phosphorus pentoxide), boron-containing compounds (e.g. boric acid and metal borates such as sodium borate, lithium metaborate, sodium tetraborate or zinc borate), organoclays (e.g. smectite clays such as bentonite, montmorillonite, hectorite, saponite and ion-exchanged forms thereof, suitably ion-exchanged forms incorporating cations selected from quaternary ammonium and alkylimidazolium ions), metal oxides (e.g. lead dioxide).

Heat absorbers

Metal salts, metal hydroxides (e.g. ATH, magnesium hydroxide), hydrates thereof (e.g. sodium tetraborate decahydrate).

Heat quenchers

Halogenated hydrocarbons (e.g. halogenated carbonate oligomers, halogenated phenyl oxides, halogenated alkylene-bis-phthalidimides and halogenated diglycyl ethers), optionally together with metal oxides (e.g. antimony oxide).

The further flame retarding component, when present, is suitably present in the polymer composition or the filler material according to the present invention at amounts between about 5 and about 70% by total weight of the flame retarding filler components, and more preferably between about 5 and about 50% by weight.

*Non-Flame Retarding Component*

The polymer composition may include one or more non-flame retardant additives for polymers, for example selected from pigments, colorants, anti-degradants, anti-oxidants, impact modifiers (e.g. core-shell graft copolymers), unmodified or conventional fillers (e.g. talc, mica, wollastonite, glass or a mixture thereof), slip agents (e.g. erucamide, oleamide, linoleamide or steramide), coupling agents (e.g. silane coupling agents), peroxides, antistatic agents, mineral oils, stabilisers, flow enhancers, mould release agents (e.g. metal stearates such as calcium stearate and magnesium stearate), nucleating agents, clarifying agents, and any combination thereof.

The non-flame retarding component, when present, is suitably present in the polymer composition or the particulate clay material according to the present invention at amounts up to about 50% by total weight of the flame retarding component, and more preferably up to about 30% by weight.

The coupling agent, where present, serves to assist binding of the filler particles to the polymer. Suitable coupling agents will be readily apparent to those skilled in the art. Examples includes silane compounds such as, for example, tri-(2-methoxyethoxy) vinyl silane. The coupling agent is typically present in an amount of about 0.1 to about 2% by weight, preferably about 1% by weight, based on the weight of the total particulate filler.

*Preparation of the Compositions*

Preparation of the polymer compositions of the present invention can be accomplished by any suitable mixing method known in the art, as will be readily apparent to one of ordinary skill in the art.

Such methods include dry blending of the individual components or precursors thereof and subsequent processing in conventional manner. Certain of the ingredients can, if desired, be pre-mixed before addition to the compounding mixture. For example, if desired the coupling agent can be pre-mixed with the surface-modified particulate clay filler according to the present invention, before addition of the clay to the mixture.

In the case of thermoplastic polymer compositions, such processing may comprise melt mixing, either directly in an extruder for making an article from the composition, or pre-mixing in a separate mixing apparatus such as a Banbury mixer. Dry blends of the individual components can alternatively be directly injection moulded without pre-melt mixing.

The filler material according to the fifth aspect of the present invention can be prepared by mixing of the components thereof intimately together. The said filler material is then suitably dry blended with the polymer and any desired additional components, before processing as described above.

For the preparation of cross-linked or cured polymer compositions, the blend of uncured components or their precursors, and, if desired, the clay and any desired non-clay component(s), will be contacted under suitable conditions of heat, pressure and/or light with an effective amount of any suitable cross-linking agent or curing system, according to the nature and amount of the polymer used, in order to cross-link and/or cure the polymer.

For the preparation of polymer compositions where the clay filler and any desired other component(s) are present *in situ* at the time of polymerisation, the blend of monomer(s) and any desired other polymer precursors, clay and any other component(s) will be contacted under suitable conditions of heat, pressure and/or light, according to the nature and amount of the monomer(s) used, in order to polymerise the monomer(s) with the clay and any other component(s) *in situ.*

*Articles*

The polymer compositions can be processed to form, or to be incorporated in, articles of commerce in any suitable way. Such processing may include compression moulding, injection moulding, gas-assisted injection moulding, calendaring, vacuum forming, thermoforming, extrusion, blow moulding, drawing, spinning, film forming, laminating or any combination thereof. Any suitable apparatus may be used, as will be apparent to one of ordinary skill in this art.

The articles which may be formed from the compositions are many and various. Examples include sheaths for electrical cables, electrical cables coated or sheathed with the polymer composition, and housings and plastics components for electrical appliances (e.g. computers, monitors, printers, photocopiers, keyboards, pagers, telephones, mobile phones, hand-held computers, network interfaces, plenums and televisions).

**Examples**

Embodiments of the present invention will now be described, purely by way of example and without limitation, with reference to the following Examples.

*Preparation of Test Materials*

The following Examples illustrate the preparation of the test materials embodying the present invention and the comparison materials incorporating unmodified clay filler materials and ATH alone.

Batches of the composition were prepared using a conventional 1.57 litre Banbury mixer, fill factor about 65%, according to the following standard composition (for 61% filler loading). The range of actual filler loadings prepared is shown in Table 2 below.

Example 1

| | |
|---|---|
| Polymer | 100phr |
| Filler | 160phr |
| Antioxidant | 1phr |
| Graft Promoter | 0.03phr |
| Coupling Agent | 1.6phr |

The ingredient materials were as follows:

Polymer

The polymer used was Escorene UL00119, an ethylene-vinylacetate copolymer (19 wt-% vinyl acetate), available from Exxon-Mobil Corporation.

Filler

The filler used in each case was a 50:50 by weight mixture of powdered fine precipitated grade ATH (Superfine SF7, available from Alcan Chemicals) and the particulate kaolin clay.

The unmodified clays used were designated B, G, H, J and O. These unmodified clays were used in preparing comparison compositions in which the filler was a 50:50 by weight mixture of ATH and unmodified clay. The chemical analysis data (by X-ray fluorescence) for these clays are set out in Table 1a below. Table 1b shows data relating to the mean equivalent particle diameter and shape factor, as well as corresponding data relating to the ATH co-filler used in the polymer compositions. The clays were particulate hydrous kaolin clays which are all available commercially, or can readily be prepared from commercially available materials.

**Table 1a**

| | XRF chemical analysis | | | | | | | | Loss on Inition |
|---|---|---|---|---|---|---|---|---|---|
| *Clay* | $SiO_2$ | $Al_2O_3$ | $Fe_2O_3$ | $TiO_2$ | CaO | MgO | $K_2O$ | $Na_2O$ | |
| **B** | 49.4 | 35.58 | 0.95 | 0.08 | 0.05 | 0.25 | 2.43 | 0.09 | 11.2 |
| **G** | 48.35 | 36.7 | 0.69 | 0.03 | 0.04 | 0.21 | 1.18 | 0.09 | 12.8 |
| **H** | 45.58 | 36.83 | 1.59 | 1.76 | 0.07 | 0.01 | 0.34 | 0.06 | 13.8 |
| **J** | 55.97 | 29.17 | 1.24 | 0.98 | 0.18 | 0.42 | 2.76 | 0.04 | 8.9 |
| **O** | 49.04 | 35.85 | 0.71 | 0.02 | 0.16 | 0.26 | 1.52 | 0.09 | 12.4 |

**Table 1b**

| *Filler Component* | NSF | d50 ($\mu$m) | Sedigraph % below | | | | | | |
|---|---|---|---|---|---|---|---|---|---|
| | | | **10** | **5** | **2** | **1** | **0.75** | **0.5** | **0.25** |
| *Superfine SF7 ATH* | 3 | 0.8 | 95.1 | 96 | 90.2 | 70.4 | 43.7 | 11.1 | <5% |
| *Clay B* | 70 | 1.61 | 93.9 | 83.7 | 52.6 | 34.2 | 27.7 | 18.7 | 10.2 |
| *Clay G* | 25 | 0.41 | 99.4 | 98.9 | 92.6 | 80.3 | 72.1 | 56.8 | 30.4 |
| *Clay H* | 35 | 0.2 | 97.9 | 96.9 | 92.1 | 86 | 82.5 | 76.4 | 52.9 |

(continued)

| Filler Component | NSF | d50 (μm) | Sedigraph % below | | | | | | |
|---|---|---|---|---|---|---|---|---|---|
| | | | **10** | **5** | **2** | **1** | **0.75** | **0.5** | **0.25** |
| *Clay J* | 25 | 0.12 | >99 | 99 | 97.8 | 97.6 | 97.8 | 96.8 | 81.5 |
| *Clay O* | 18 | 0.41 | 100 | 98.8 | 91 | 76.6 | 69.4 | 57.5 | 30.8 |

A further comparison composition was also prepared, filled with ATH in the absence of a clay co-filler.

Batches of surface-modified clays were prepared by treating each of clays B, G, H, J and O with 1 wt.-% Armeen HT (hydrogenated tallow-alkylamine), available from Akzo-Nobel. Clay O was also treated with 2 wt.-% Armeen HT. The treatment was carried out by mixing the clay and the amine prills in a high speed mixer for 10 minutes at a temperature of 70°C. The 1 wt.-% coated versions of clays B, G, H, J and O are referred to herein as clays B*, G*, H*, J* and O* respectively. The 2 wt.-% coated version of clay O is referred to herein as clay O**.

In addition, corresponding compositions were prepared using clays O and O*, but omitting the silane coupling agent. These compositions were tested in the DSC test and the resulting data is included in Table 5 below.

Antioxidant

The antioxidant used was Irganox 1010, a commercially available phenolic antioxidant available from Ciba.

Graft Promoter

The graft promoter used was Perkadox BC40-40MB-gr (dicumyl peroxide), which serves to promote grafting of the unsaturated silane coupling agent to the polymer without inducing too much matrix cross-linking.

Coupling Agent

The coupling agent used was the silane tri-(2-methoxyethoxy) vinyl silane, available from Kettlitz.

Example 2

| | |
|---|---|
| Polymer | 100phr |
| Filler | 160phr |
| Antioxidant | 0.5phr |
| Coupling Agent | 1.6phr |

The ingredient materials are set out below.

The polymer used was Escorene UL00119, as in Example 1. The filler used was a mixture of powdered fine precipitated grade ATH (Apyral 40CD, available from Nabaltec GmbH) and the particulate kaolin clay. In this example, the total filler loading was 61wt.-% and various weight ratios of ATH and kaolin were used. The antioxidant used was Irganox 1010, as in Example 1. The coupling agent used was the Silquest A1100 amino silane, available from GE Silicone.

*Preparation of Test Samples*

Each test composition was made into a sheet using twin roll mill set up at 120°C.

Plaques were then pressed at 160°C according to the following sequence: the plaques were pressed together with very little pressure for 1 minute; a 20 bar (2 MPa) pressure was applied for 1 minute; then a 50 bar (5 MPa) pressure for a further 1 minute; and then the pressure was increased to about 200 bar (20 MPa) for a further 3 minutes.

Plaques of 1.8 mm thickness were produced for mechanical testing and the UL-64 vertical burning test. Plaques of 3 mm thickness were produced for the Limiting Oxygen Index (LOI) test and the assessment of char strength. The dimensions of the test samples as cut from the plaques are given below in the discussion of each test.

### *Test Methods*

#### Mechanical Properties

The mechanical properties tensile strength (at peak) and elongation at break of were tested for each composition using a Monsanto tensometer. Test pieces were conditioned for 48 hours at 23°C, 50% relative humidity (RH) prior to testing. The test speed was set up at 100 mm/min.

#### Underwriters Laboratories Standard UL94 Flammabilitv Test (ASTM 3801)

The UL94 vertical burning test was carried out by clamping, igniting and studying the rate of burning of conditioned samples. Thin samples of 125 x 12.5 x 1.8 mm (unless otherwise stated) were used for the test in order to show differences in the burning behaviour (some of the compounds could not be compared at 3 mm thickness since they achieved V0 rating, i.e. burning less than 10 seconds and no dripping).

The test piece was clamped vertically by its top 6 mm, and positioned 300 mm above a small piece of cotton wool stretched to 50 x 50 mm. The test piece was then lit at its bottom using a Bunsen burner with a blue flame of 20 mm length, held 10 mm away from the base of the sample for 10 seconds. If the flame went out, the burner was applied for a further 10 seconds and the time it took to extinguish itself was again recorded. Otherwise, the time it took for the sample to burn all the way up to the clamp was recorded.

#### Oxygen Index

A Ceast Oxygen Index apparatus was used to determine the minimum oxygen concentration necessary to keep a sample burning for 3 minutes. The samples were cut out as 70 x 6.5 x 3 mm pieces and were conditioned for 48 hours at 23°C and 50% RH, according to British Standard BS2782, method 141D.

#### Cone calorimetry

Cone calorimetry tests were carried out according to ISO 5660 standard using test pieces of 4mm thickness and a single heat flux of 35 or 50 kW/m$^2$. The heat release rate, specific extinction area and mass loss were all measured with time. Total heat release, ignition and extinction times were also recorded.

#### Thermal Stability

A modified procedure based on an ASTM D 3895-98 was used to study the thermal stability / oxidation of the compounds. The oxidation induction time (OIT) was measured using a Perkin-Elmer DSC-7 Differential Scanning Calorimeter (DSC). The following DSC sequence was applied:

1. Heat from 20°C to 225°C at 20°C per minute
2. Hold at 225°C for 5 minutes
3. Hold at 225°C until polymer degrades.

Steps 1 and 2 were conducted in a nitrogen environment at a pressure of ca. 25 psi (172 kPa). Step 3 was conducted in an oxygen environment at 40 psi (276 kPa).

### *Results*

#### Example 1

The **tensile elongation** data for the tested samples are shown in Table 2 below. For convenience, the results for the samples containing unmodified filler (comparisons) are shown in the left hand of the two elongation data columns; the results for the samples containing coated filler (invention) are shown in the right hand column.

**Table 2**

| Clay Filler Component (present with ATH at 50:50 by wt.-% ratio) | Filler Loading (wt. %) | Elongation (%) | Elongation (%) |
|---|---|---|---|
| *G* | 53.7 | 224 | |

(continued)

| Clay Filler Component (present with ATH at 50:50 by wt.-% ratio) | Filler Loading (wt. %) | Elongation (%) | Elongation (%) |
|---|---|---|---|
| G | 52.1 | 147 | |
| G | 52.1 | 147 | |
| H | 59.1 | 171 | |
| J | 48.6 | 434 | |
| J | 51.7 | 187 | |
| O | 50.3 | 257 | |
| O | 52.9 | 157 | |
| O | 52.9 | 157 | |
| O | 61.3 | 105 | |
| O | 61.3 | 98 | |
| O | 61.9 | 95 | |
| B | 55.5 | 141 | |
| B | 60 | 117 | |
| B | 61.9 | 82 | |
| G* | 49 | | 562 |
| G* | 51.5 | | 242 |
| H* | 61.5 | | 162 |
| J* | 49.8 | | 421 |
| O* | 48.5 | | 589 |
| O* | 51.2 | | 343 |
| O* | 60.6 | | 135 |
| B* | 60.9 | | 137 |
| B* | 58.5 | | 166 |

The **fire retardancy** data (average of three different clays) are shown in Table 3 below:

**Table 3**

| | Uncoated | Coated |
|---|---|---|
| Burning characteristics UL94-V | 1 burn | 2 burns (re-ignition needed) |
| Typical burning rate (mm/s) | 1.1 | 0.65 |

In Table 3, "1 burn" indicates that the sample required only one ignition with which to burn. "2 burns" indicates that the sample required two ignitions to burn.

The **Limiting Oxygen Index** data are shown in Table 4 below:

**Table 4**

| Filler Component (clays are present with ATH at 50:50 wt.-% ratio) | Filler loading (wt.%) | LOI (%) |
|---|---|---|
| ATH alone | 60.9 | 39 |
| Clay O | 61.3 | 30.5 |
| Clay O* | 60.6 | 31 |
| Clay H | 59.1 | 29 |
| Clay H* | 61.5 | 31.5 |
| Clay B | 55.6 | 26.5 |
| Clay B* | 58.1 | 29.5 |

The **DSC** data shown in Table 5 below indicate that degradation of the polymer can be delayed when the filler incorporates an amine-modified clay.

**Table 5**

| Filler Component (clays are present with ATH at 50:50 wt.-% ratio) | Filler loading (wt.%) | OIT (min) |
|---|---|---|
| Clay O | 61.3 | 16.7 |
| Clay O* | 60.6 | 17.1 |
| Clay H | 59.1 | 15.2 |
| Clay H* | 61.5 | 28.8 |
| Clay O - no silane | 61.8 | 8.3 |
| Clay O* - no silane | 61.2 | 19.7 |

Example 2

The **tensile elongation** data for the tested samples are shown in Table 6 below. For convenience, the results for the samples containing unmodified filler (comparisons) are shown in the left hand of the two elongation data columns. The results for the samples containing coated filler (invention) are shown in the right hand column.

**Table 6**

| Clay Filler Component | Ratio ATH:clay (by wt.-%) | Elongation (%) | Elongation (%) |
|---|---|---|---|
| Clay O | 75:25 | 176 | |
| Clay O | 60:40 | 142 | |
| Clay O** | 75:25 | | 184 |
| Clay O** | 60:40 | | 166 |

The **fire retardancy** data for the tested samples using the UL94-V setup are shown in Table 7 below:

**Table 7**

| Filler Component | ATH:clay ratio (by wt.-%) | 3.3mm thickness - | | 2mm thickness - | |
|---|---|---|---|---|---|
| | | Burning time /s for 5 specimens 2x10s ignition | Burning time /s for 5 specimens 3x10s ignition | Burning time/s for 5 specimens 2x8s ignition | Number of drips 2x10s ignition |
| ATH alone | 100:0 | 43 | 277 | N/A | ~120 |
| Clay O | 75:25 | 14 | 139 | 486 | 7 |
| Clay O** | 75:25 | 13 | 62 | 205 | 4-5 |
| Clay O | 60:40 | 88 | N/A | >1000 | 4 |
| Clay O** | 60:40 | 79 | N/A | >1000 | 3 |
| N/A = not available | | | | | |

The **Limiting Oxygen Index** data are shown in Table 8 below:

**Table 8**

| Filler Component | ATH:clay ratio (by wt.-%) | LOI (%) |
|---|---|---|
| ATH alone | 100:0 | 39 |
| Clay O | 80:20 | 35 |
| Clay O** | 80:20 | 35 |
| Clay O | 75:25 | 33.5 |
| Clay O** | 75:25 | 33.5 |

The **Cone Calorimetry** data at 50kW/m$^2$ heat flux are shown in Table 9 below:

**Table 9**

| Filler Component | ATH:clay ratio (by wt.-%) | Ignition time / s | Extinction time / s | 1st Peak Heat Release Rate / kW/m$^2$ | Average Specific Extinction Area / m$^2$/kg | Total Heat Release / kJ |
|---|---|---|---|---|---|---|
| ATH | 100:0 | 69 | 515 | 310 | 400 | 830 |
| Clay O** | 80:20 | 66 | 760 | 230 | 265 | 855 |
| Clay O** | 70:30 | 67 | 750 | 235 | 270 | 850 |
| Clay O** | 50:50 | 60 | 750 | 235 | 325 | 885 |

*Discussion*

The use of a clay filler surface-modified with an organic coating compound in accordance with the present invention improves the flame resistance and mechanical properties of a thermoplastic resin, in comparison with a resin filled with the corresponding unmodified clay filler. Additional benefits may also be realised in relation to smoke release and oxygen index.

The foregoing broadly describes the present invention, without limitation. Variations and modifications as will be readily apparent to those of ordinary skill in this art are intended to be included within the scope of this application and subsequent patent(s).

**Claims**

1. Use of a particulate clay material as a flame retardant in a thermoplastic resin to improve the flame resistance of the thermoplastic resin in comparison with the thermoplastic resin filled with the corresponding unmodified clay material, wherein the clay material is surface-modified with at least one organic compound comprising an organic portion and a basic portion having a particle shape factor which is greater than 10, wherein the shape factor is measured as described in the description and wherein the particulate clay material has a mean equivalent particle diameter ($d_{50}$) less than or equal to 4 microns ($\mu$m), measured by sedimentation of the particulate material in an aqueous medium as described in the description.

2. Use according to claim 1, wherein the organic portion of the organic compound comprises a straight or branched chain alkyl group having between 8 and 24 carbon atoms, or wherein the organic portion of the organic compound comprises one or more cyclic organic groups, which may be saturated, unsaturated or aromatic, and may optionally include one or more heteroatoms.

3. Use according to any one of the preceding claims, wherein the organic portion of the organic compound includes one or more functional substituent groups which can favourably interact with a polymer filled using the material, wherein the one or more functional substituent groups are selected from amide or polyamide groups, carboxyl groups, vinyl groups, mercapto or other sulphur-containing groups, or alkylamino groups.

4. Use according to any one of the preceding claims, wherein the basic portion of the organic compound comprises one or more primary amine group $NH_2$.

5. Use according to claim 1, wherein the organic compound is selected from hydrogenated-tallowalkyl-amine, organic mono-amines, organic polyamines, melamine, and derivatives thereof in which the organic portion carries at least one functional substituent group which can favourably interact with a polymer filled using the material wherein the at least one functional substituent group is selected from amide or polyamide groups, carboxyl groups, vinyl groups, mercapto or other sulphur-containing groups, or alkylamino groups.

6. Use according to any one of the preceding claims, in the form of substantially dry particles.

7. Use according to any one of the preceding claims, wherein the clay is selected from hydrous kaolin, partially calcined kaolin (metakaolin), fully calcined kaolin, ball clay, talc, mica and any combination thereof.

8. Use according to any one of claims 1 to 7, wherein the particulate clay filler is present in the polymer composition at a particle number per unit volume of at least 1 particle per 100 $\mu m^3$.

9. Use according to any one of claims 1 to 8, wherein the clay filler is present in the polymer composition between 5 and 200 parts by weight per hundred of polymer, or wherein the clay filler is present in the polymer composition between 5 and 100 parts by weight per hundred of polymer, or
wherein the clay filler is present between 10 and 50 parts by weight per hundred of polymer, or
wherein the clay filler is present in the range of 20 to 40 parts by weight per hundred of polymer.

10. Use according to any one of claims 1 to 9, comprising one or more further components selected from one or more conventional flame retardant component, one or more conventional non-flame retardant component, and both.

11. Use according to claim 10, wherein the conventional flame retardant component is selected from phosphorus-containing compounds, boron-containing compounds, metal salts, metal hydroxides, metal oxides, hydrates thereof, organoclays, halogenated hydrocarbons, and any combination thereof, or
wherein the conventional flame retardant component comprises alumina trihydrate (ATH).

12. Use according to any one of claims 10 to 11, wherein the conventional non-flame retardant component is selected from pigments, colorants, anti-degradants, anti-oxidants, impact modifiers, inert fillers, slip agents, antistatic agents, mineral oils, stabilisers, flow enhancers, mould release agents, nucleating agents, clarifying agents and any combination thereof.

13. A particulate clay material which is surface-modified with at least one organic compound comprising an organic portion and a basic portion having a particle shape factor which is greater than 20, wherein the shape factor is measured as described in the description and wherein the particulate clay material has a mean equivalent particle diameter (dso) less than or equal to 4 microns ($\mu m$), measured by sedimentation of the particulate material in an aqueous medium as described in the description.

14. A particulate clay material according to claim 13, wherein the organic portion of the organic compound comprises a straight or branched chain alkyl group having between 8 and 24 carbon atoms, or wherein the organic portion of the organic compound comprises one or more cyclic organic groups, which may be saturated, unsaturated or aromatic, and may optionally include one or more heteroatoms.

15. A particulate clay material according to any one of claims 13-14, wherein the organic portion of the organic compound includes one or more functional substituent groups which can favourably interact with a polymer filled using the material, wherein the one or more functional substituent groups are selected from amide or polyamide groups, carboxyl groups, vinyl groups, mercapto or other sulphur-containing groups, or alkylamino groups.

16. A particulate clay material according to any one of claims 13-15, wherein the basic portion of the organic compound comprises one or more primary amine group $NH_2$.

17. A particulate clay material according to claim 13, wherein the organic compound is selected from hydrogenated-tallowalkyl-amine, organic mono-amines, organic polyamines, melamine, and derivatives thereof in which the organic portion carries at least one functional substituent group which can favourably interact with a polymer filled using the material wherein the at least one functional substituent group is selected from amide or polyamide groups, carboxyl groups, vinyl groups, mercapto or other sulphur-containing groups, or alkylamino groups.

18. A particulate clay material according to any one of claims 13-17, in the form of substantially dry particles.

19. A particulate clay material according to any one of claims 13-18, wherein the clay is selected from hydrous kaolin, partially calcined kaolin (metakaolin), fully calcined kaolin, ball clay, talc, mica and any combination thereof.

20. A method of preparing a particulate clay material according to any one of claims 13 to 19, comprising contacting a particulate clay which is not surface-modified with the organic compound or compounds with a sufficient quantity of the organic compound or compounds under conditions whereby the said organic compound or compounds associate with the particles of the particulate clay to surface-modify the same.

21. A polymer composition comprising a polymer and a particulate clay filler distributed in the polymer composition, wherein the particulate clay filler is a material according to any one of claims 13 to 19.

22. A polymer composition according to claim 21, wherein the polymer is a thermoplastic polymer.

23. A polymer composition according to claim 21 or claim 22, which is a flame retardant polymer composition.

24. A polymer composition according to any one of claims 21 to 23, wherein the particulate clay filler is present in the polymer composition at a particle number per unit volume of at least 1 particle per 100 $\mu m^3$.

25. A polymer composition according to any one of claims 21 to 24, wherein the clay filler is present in the polymer composition between 5 and 200 parts by weight per hundred of polymer, or wherein the clay filler is present in the polymer composition between 5 and 100 parts by weight per hundred of polymer, or wherein the clay filler is present between 10 and 50 parts by weight per hundred of polymer, or wherein the clay filler is present in the range of 20 to 40 parts by weight per hundred of polymer.

26. A polymer composition according to any one of claims 21 to 25, comprising one or more further components selected from one or more conventional flame retardant component, one or more conventional non-flame retardant component, and both.

27. A polymer composition according to claim 26, wherein the conventional flame retardant component is selected from phosphorus-containing compounds, boron-containing compounds, metal salts, metal hydroxides, metal oxides, hydrates thereof, organoclays, halogenated hydrocarbons, and any combination thereof, or wherein the conventional flame retardant component comprises alumina trihydrate (ATH).

28. A polymer composition according to any one of claims 26 to 27, wherein the conventional non-flame retardant component is selected from pigments, colorants, anti-degradants, anti-oxidants, impact modifiers, inert fillers, slip agents, antistatic agents, mineral oils, stabilisers, flow enhancers, mould release agents, nucleating agents, clarifying agents and any combination thereof.

29. A particulate filler material for a flame retardant polymer composition, the filler material comprising a mixture of a particulate clay and one or more further particulate flame retardant, wherein the particulate clay is a material according to any one of claims 13 to 19, for example wherein the one or more further particulate flame retardant comprises alumina trihydrate (ATH).

30. A process for forming a polymer composition as defined in any one of claims 21 to 28, comprising mixing a liquid or particulate solid polymer or one or more precursor thereof with a material according to any one of claims 13 to 19 and any other desired components, and - if one or more precursor of the polymer component is present - subsequently curing the mixture.

31. A mixture of a liquid or particulate solid polymer or one or more precursor thereof and a particulate clay material according to any one of claims 13 to 19 and optionally any other components of a polymer composition as desired, for subsequent processing to form a polymer composition according to any one of claims 21 to 28.

32. An article formed from a flame retardant polymer composition according to any one of claims 21 to 28.

33. A sheath, coating or housing for an electrical product, formed from a polymer composition as claimed in any one of claims 21 to 28.

**Patentansprüche**

1. Verwendung einer partikulären Tonerde als Flammschutzmittel in einem Thermoplast, um die Flammbeständigkeit des Thermoplasts im Vergleich zu einem mit der entsprechend unmodifizierten Tonerde gefüllten Thermoplast zu erhöhen, wobei die Tonerde mit mindestens einer organischen Verbindung oberflächenmodifiziert wurde, wobei die organische Verbindung einen organischen Anteil und einen basischen Anteil mit einem Formfaktor größer als 10 aufweist, wobei der Formfaktor gemäß der Beschreibung gemessen wird und wobei die partikuläre Tonerde einen mittleren Äquivalentdurchmesser ($d_{50}$) von weniger als oder gleich 4 Mikrometer ($\mu m$) aufweist und durch Sedimentation des partikulären Materials in einem wässrigen Medium gemäß der Beschreibung gemessen wird.

2. Verwendung gemäß Anspruch 1, wobei der organische Anteil der organischen Verbindung eine geradkettige oder verzweigtkettige Alkylgruppe mit 8 bis 24 Kohlenstoffatomen umfasst oder wobei der organische Anteil der organischen Verbindung eine oder mehrere gesättigte, ungesättigte oder aromatische und gegebenenfalls ein oder mehrere Heteroatome enthaltende cyclische organische Gruppen umfasst.

3. Verwendung gemäß einem der vorhergehenden Ansprüche, wobei der organische Anteil der organischen Verbindung eine oder mehrere funktionelle Substituenten enthält, die mit einem mit dem Material gefüllten Polymer vorteilhaft interagieren können, wobei es sich bei dem einen oder den mehreren funktionellen Substituenten um Amid- oder Polyamidgruppen, Carboxylgruppen, Vinylgruppen, Merkaptogruppen oder andere schwefelhaltige Gruppen oder Alkylaminogruppen handelt.

4. Verwendung gemäß einem der vorhergehenden Ansprüche, wobei der basische Anteil der organischen Verbindung eine oder mehrere primäre Amingruppen $NH_2$ umfasst.

5. Verwendung gemäß Anspruch 1, wobei die organische Verbindung ausgewählt ist aus hydriertem Talg-Alkylamin, organischen Monoaminen, organischen Polyaminen, Melamin und deren Derivaten, in denen der organische Anteil mindestens einen funktionellen Substituenten enthält, der mit einem mit dem Material gefüllten Polymer vorteilhaft interagieren kann, wobei mindestens ein funktioneller Substituent ausgewählt ist aus Amid- oder Polyamidgruppen, Carboxylgruppen, Vinylgruppen, Merkaptogruppen, anderen schwefelhaltigen Gruppen oder Alkylaminogruppen.

6. Verwendung gemäß einem der vorhergehenden Ansprüche in Form von im Wesentlichen trockenen Partikeln.

7. Verwendung gemäß einem der vorhergehenden Ansprüche, wobei der Ton ausgewählt ist aus wasserhaltigem Kaolin, teilweise gebranntem Kaolin (Metakaolin), vollständig gebranntem Kaolin, Töpferton, Talk, Glimmer und einer beliebigen Kombination aus diesen.

8. Verwendung gemäß einem der Ansprüche 1 bis 7, wobei der partikuläre Kaolinfüllstoff in der Polymerzusammensetzung in einer Partikelanzahl pro Volumeneinheit von mindestens 1 Teilchen pro 100 $\mu m^3$ vorliegt.

9. Verwendung gemäß einem der Ansprüche 1 bis 8, wobei der Kaolinfüllstoff in der Polymerzusammensetzung zwischen 5 und 200 Gewichtsanteile pro 100 Teile Polymer aufweist oder wobei der Kaolinfüllstoff in der Polymerzusammensetzung zwischen 5 und 100 Gewichtsanteile pro 100 Teile Polymer aufweist oder wobei der Kaolinfüllstoff zwischen 10 und 50 Gewichtsanteile pro 100 Teile Polymer aufweist oder wobei der Kaolinfüllstoff zwischen 20 und 40 Gewichtsanteile pro 100 Teile Polymer aufweist.

10. Verwendung gemäß einem der Ansprüche 1 bis 9, umfassend eine oder mehrere weitere Komponenten, die aus einer oder mehreren herkömmlichen flammhemmenden Komponenten, einer oder mehreren herkömmlichen nicht flammhemmenden Komponenten und/oder beiden Komponenten ausgewählt wurden.

11. Verwendung gemäß Anspruch 10, wobei die herkömmliche flammhemmende Komponente ausgewählt ist aus phosphorhaltigen Verbindungen, borhaltigen Verbindungen, Metallsalzen, Metallhydroxiden, Metalloxiden, deren Hydraten, Organoschichtsilikaten, halogenierten Kohlenwasserstoffen und einer beliebigen Kombination davon oder wobei die herkömmliche flammhemmende Komponente Aluminiumoxidtrihydrat (ATH) umfasst.

12. Verwendung gemäß einem der Ansprüche 10 bis 11, wobei die herkömmliche nicht flammhemmende Komponente ausgewählt ist aus Pigmenten, Färbemitteln, Alterungsschutzmitteln, Antioxidationsmitteln, Schlagzähigkeitsmodifikatoren, inerten Füllstoffen, Gleitmitteln, Antistatika, Mineralölen, Stabilisatoren Fließbildungsmitteln, Formtrennmitteln, Keimbildnern, Klärmitteln und einer Kombination aus diesen.

13. Mit mindestens einer organischen Verbindung oberflächenmodifizierte partikuläre Tonerde, wobei die organische Verbindung einen organischen Anteil und einen basischen Anteil mit einem Formfaktor größer als 20 aufweist, wobei der Formfaktor gemäß der Beschreibung gemessen wird und wobei die partikuläre Tonerde einen mittleren Äquivalentdurchmesser ($d_{50}$) von weniger als oder gleich 4 Mikrometer ($\mu m$) aufweist und durch Sedimentation des partikulären Materials in einem wässrigen Medium gemäß der Beschreibung gemessen wird.

14. Partikuläre Tonerde gemäß Anspruch 13, wobei der organische Anteil der organischen Verbindung eine geradkettige oder verzweigtkettige Alkylgruppe mit 8 bis 24 Kohlenstoffatomen umfasst oder wobei der organische Anteil der organischen Verbindung eine oder mehrere gesättigte, ungesättigte oder aromatische und gegebenenfalls ein oder mehrere Heteroatome enthaltende cyclische organische Gruppen umfasst.

15. Partikuläre Tonerde gemäß einem der Ansprüche 13 bis 14, wobei der organische Anteil der organischen Verbindung eine oder mehrere funktionelle Substituenten enthält, die mit einem mit dem Material gefüllten Polymer vorteilhaft interagieren können, wobei es sich bei dem einen oder den mehreren funktionellen Substituenten um Amid- oder Polyamidgruppen, Carboxylgruppen, Vinylgruppen, Merkaptogruppen oder andere schwefelhaltige Gruppen oder Alkylaminogruppen handelt.

16. Partikulären Tonerde gemäß einem der Ansprüche 13 bis 15, wobei der basische Anteil der organischen Verbindung eine oder mehrere primäre Amingruppen $NH_2$ umfasst.

17. Partikuläre Tonerde gemäß Anspruch 13, wobei die organische Verbindung ausgewählt ist aus hydriertem Talg-Alkylamin, organischen Monoaminen, organischen Polyaminen, Melamin und deren Derivaten, in denen der organische Anteil mindestens einen funktionellen Substituenten enthält, der mit einem mit dem Material gefüllten Polymer vorteilhaft interagieren kann, wobei mindestens ein funktioneller Substituent ausgewählt ist aus Amid- oder Polyamidgruppen, Carboxylgruppen, Vinylgruppen, Merkaptogruppen, anderen schwefelhaltigen Gruppen oder Alkylaminogruppen.

18. Partikuläre Tonerde gemäß einem der Ansprüche 13 bis 17 in Form von im Wesentlichen trockenen Partikeln.

19. Partikuläre Tonerde gemäß einem der Ansprüche 13 bis 18, wobei der Ton ausgewählt ist aus wasserhaltigem Kaolin, teilweise gebranntem Kaolin (Metakaolin), vollständig gebranntem Kaolin, Töpferton, Talk, Glimmer und einer Kombination aus diesen.

20. Verfahren zur Herstellung von partikulärer Tonerde gemäß einem der Ansprüche 13 bis 19, umfassend die partikuläre und nicht mit organischen Verbindung(en) oberflächenmodifizierte Tonerde mit einer ausreichenden Menge organischer Verbindung(en) unter solchen Bedingungen in Kontakt bringen, unter denen sich die organische(n) Verbindung(en) mit den Teilchen der partikulären Tonerde verbinden und diese oberflächenmodifizieren.

21. Polymerzusammensetzung, umfassend ein Polymer und einen in der Polymerzusammensetzung verteilten partikulären Kaolinfüllstoff, wobei der partikuläre Kaolinfüllstoff ein Material gemäß einem der Ansprüche 13 bis 19 ist.

22. Polymerzusammensetzung gemäß Anspruch 21, wobei das Polymer ein thermoplastisches Polymer ist.

23. Polymerzusammensetzung gemäß Anspruch 21 oder Anspruch 22, wobei es sich dabei um eine flammhemmende Polymerzusammensetzung handelt.

24. Polymerzusammensetzung gemäß einem der Ansprüche 21 bis 23, wobei der partikuläre Kaolinfüllstoff in der Polymerzusammensetzung in einer Partikelanzahl pro Volumeneinheit von mindestens 1 Teilchen pro 100 $\mu m^3$ vorliegt.

25. Polymerzusammensetzung gemäß einem der Ansprüche 21 bis 24, wobei der Kaolinfüllstoff in der Polymerzusammensetzung zwischen 5 und 200 Gewichtsanteile pro 100 Teile Polymer aufweist oder wobei der Kaolinfüllstoff in der Polymerzusammensetzung zwischen 5 und 100 Gewichtsanteile pro 100 Teile Polymer aufweist oder wobei der Kaolinfüllstoff in der Polymerzusammensetzung zwischen 10 und 50 Gewichtsanteile pro 100 Teile Polymer aufweist oder wobei der Kaolinfüllstoff in der Polymerzusammensetzung zwischen 20 und 40 Gewichtsanteile pro 100 Teile Polymer aufweist.

26. Polymerzusammensetzung gemäß einem der Ansprüche 21 bis 25, umfassend eine oder mehrere weitere Komponenten, die aus einer oder mehreren herkömmlichen flammhemmenden Komponenten, einer oder mehreren herkömmlichen nicht flammhemmenden Komponenten und/oder beiden Komponenten ausgewählt wurden.

27. Polymerzusammensetzung gemäß Anspruch 26, wobei die herkömmliche flammhemmende Komponente ausgewählt ist aus phosphorhaltigen Verbindungen, borhaltigen Verbindungen, Metallsalzen, Metallhydroxiden, Metalloxiden, deren Hydraten, Organoschichtsilikaten, halogenierten Kohlenwasserstoffen und einer beliebigen Kombination von diesen oder wobei die herkömmliche flammhemmende Komponente Aluminiumoxidtrihydrat (ATH) umfasst.

28. Polymerzusammensetzung gemäß einem der Ansprüche 26 bis 27, wobei die herkömmliche nicht flammhemmende Komponente ausgewählt ist aus Pigmenten, Färbemitteln, Alterungsschutzmitteln, Antioxidationsmitteln, Schlagzähigkeitsmodifikatoren, inerten Füllstoffen, Gleitmitteln, Antistatika, Mineralölen, Stabilisatoren Fließbildungsmitteln, Formtrennmitteln, Keimbildnern, Klärmitteln und einer Kombination von diesen.

29. Partikuläre Tonerde für eine flammhemmende Polymerzusammensetzung, wobei das Füllmaterial eine Mischung aus partikulärer Tonerde und ein oder mehrere weitere partikuläre Flammverzögerungsmittel umfasst, wobei die partikuläre Tonerde ein Material gemäß einem der Ansprüche 13 bis 19 ist, beispielsweise wobei das eine oder die mehreren weiteren partikulären Flammverzögerungsmittel Aluminiumoxidtrihydrat (ATH) umfassen.

30. Verfahren zur Bildung einer Polymerzusammensetzung gemäß einem der Ansprüche 21 bis 28, umfassend einen flüssigen oder partikulären festen Polymer oder einen oder mehreren Vorläufer davon mit einem Material gemäß einem der Ansprüche 13 bis 19 und anderen gewünschten Komponenten mischen und - falls eine oder mehrere Vorläufer der Polymerzusammensetzung vorhanden sind - die Mischung anschließend aushärten.

31. Mischung aus einem flüssigen oder partikulären festen Polymer und/oder einem oder mehreren Vorläufern davon und einer partikulären Tonerde gemäß einem der Ansprüche 13 bis 19 und gegebenenfalls anderen gewünschten Bestandteilen einer Polymerzusammensetzung für die anschließende Verarbeitung in eine Polymerzusammensetzung gemäß einem der Ansprüche 21 bis 28.

32. Gegenstand, der aus einer flammhemmenden Polymerzusammensetzung gemäß einem der Ansprüche 21 bis 28 gebildet wurde.

33. Mantel, Beschichtung oder Gehäuse für ein elektrisches Produkt, das aus einer Polymerzusammensetzung gemäß einem der Ansprüche 21 bis 28 gebildet wurde.

**Revendications**

1. Une utilisation d'un matériau d'argile particulaire comme ignifuge dans une résine thermoplastique pour améliorer la résistance à la flamme de la résine thermoplastique par rapport à la résine thermoplastique chargée du matériau d'argile non modifié correspondant, dans laquelle le matériau d'argile est modifié en surface avec au moins un composé organique comprenant une partie organique et une partie basique ayant un facteur de forme de particule qui est supérieur à 10, dans laquelle le facteur de forme est mesuré comme décrit dans la description et dans laquelle le matériau d'argile particulaire a un diamètre de particule équivalent moyen ($d_{50}$) inférieur ou égal à 4 microns ($\mu$m), mesuré par sédimentation du matériau particulaire dans un milieu aqueux comme décrit dans la description.

2. L'utilisation selon la revendication 1, dans laquelle la partie organique du composé organique comprend un groupe alkyle à chaîne droite ou ramifiée ayant entre 8 et 24 atomes de carbone, ou dans laquelle la partie organique du composé organique comprend un ou plusieurs groupes organiques cycliques, qui peuvent être saturés, insaturés ou aromatiques, et peuvent éventuellement comprendre un ou plusieurs hétéroatomes.

3. L'utilisation selon l'une quelconque des revendications précédentes, dans laquelle la partie organique du composé organique comprend un ou plusieurs groupes substituants fonctionnels qui peuvent interagir favorablement avec un polymère chargé en utilisant le matériau, dans laquelle le ou plusieurs groupes substituants fonctionnels sont choisis parmi les groupes amide ou polyamide, les groupes carboxyle, les groupes vinyle, les groupes mercapto ou autres groupes contenant du soufre, ou les groupes alkylamino.

4. L'utilisation selon l'une quelconque des revendications précédentes, dans laquelle la partie basique du composé organique comprend un ou plusieurs groupes amine primaire $NH_2$.

5. L'utilisation selon la revendication 1, dans laquelle le composé organique est choisi parmi l'alkylamine de suif hydrogéné, les mono-amines organiques, les polyamines organiques, la mélamine et les dérivés de ceux-ci, dans lequel la partie organique porte au moins un groupe substituant fonctionnel qui peut interagir favorablement avec un polymère chargé en utilisant le matériau dans laquelle l'au moins un groupe substituant fonctionnel est choisi parmi les groupes amide ou polyamide, les groupes carboxyle, les groupes vinyle, les groupes mercapto ou autres groupes contenant du soufre, ou les groupes alkylamino.

6. L'utilisation selon l'une quelconque des revendications précédentes, sous forme de particules sensiblement sèches.

7. L'utilisation selon l'une quelconque des revendications précédentes, dans laquelle l'argile est choisie parmi le kaolin hydraté, le kaolin partiellement calciné (métakaolin), le kaolin entièrement calciné, l'argile plastique, le talc, le mica et l'une quelconque des combinaisons de ceux-ci.

8. L'utilisation selon l'une quelconque des revendications 1 à 7, dans laquelle la charge d'argile particulaire est présente dans la composition polymère à un nombre de particules par volume unitaire d'au moins 1 particule par 100 $\mu m^3$.

9. L'utilisation selon l'une quelconque des revendications 1 à 8, dans laquelle la charge d'argile est présente dans la composition polymère entre 5 et 200 parties en poids pour cent de polymère, ou
dans laquelle la charge d'argile est présente dans la composition polymère entre 5 et 100 parties en poids pour cent de polymère, ou
dans laquelle la charge d'argile est présente entre 10 et 50 parties en poids pour cent de polymère, ou
dans laquelle la charge d'argile est présente dans la plage de 20 à 40 parties en poids pour cent de polymère.

10. L'utilisation selon l'une quelconque des revendications 1 à 9, comprenant un ou plusieurs autres composants choisis parmi un ou plusieurs composants ignifuges classiques, un ou plusieurs composants non ignifuges classiques et les deux.

11. L'utilisation selon la revendication 10, dans laquelle le composant ignifuge classique est choisi parmi les composés contenant du phosphore, les composés contenant du bore, les sels métalliques, les hydroxydes métalliques, les oxydes métalliques, les hydrates de ceux-ci, les argiles organiques, les hydrocarbures halogénés et l'une quelconque des combinaisons de ceux-ci, ou
dans laquelle le composant ignifuge classique comprend du trihydrate d'alumine (ATH).

12. L'utilisation selon l'une quelconque des revendications 10 à 11, dans laquelle le composant non ignifuge classique est choisi parmi les pigments, les colorants, les antidégradants, les antioxydants, les modificateurs d'impact, les charges inertes, les agents glissants, les agents antistatiques, les huiles minérales, les stabilisants, les améliorateurs d'écoulement, les agents démoulants, les agents de nucléation, les agents de clarification et l'une quelconque des combinaisons de ceux-ci.

13. Un matériau d'argile particulaire qui est modifié en surface avec au moins un composé organique comprenant une partie organique et une partie basique ayant un facteur de forme de particule qui est supérieur à 20, dans lequel le facteur de forme est mesuré comme décrit dans la description et dans lequel le matériau d'argile particulaire a un diamètre de particule équivalent moyen ($d_{50}$) inférieur ou égal à 4 microns ($\mu m$), mesuré par sédimentation du matériau particulaire dans un milieu aqueux comme décrit dans la description.

14. Un matériau d'argile particulaire selon la revendication 13, dans lequel la partie organique du composé organique comprend un groupe alkyle à chaîne droite ou ramifiée ayant entre 8 et 24 atomes de carbone, ou dans lequel la partie organique du composé organique comprend un ou plusieurs groupes organiques cycliques, qui peuvent être saturés, insaturés ou aromatiques, et peuvent éventuellement comprendre un ou plusieurs hétéroatomes.

15. Un matériau d'argile particulaire selon l'une quelconque des revendications 13 à 14, dans lequel la partie organique du composé organique comprend un ou plusieurs groupes substituants fonctionnels qui peuvent interagir favorablement avec un polymère chargé en utilisant le matériau, dans lequel le ou plusieurs groupes substituants fonctionnels sont choisis parmi les groupes amide ou polyamide, les groupes carboxyle, les groupes vinyle, les groupes mercapto ou autres groupes contenant du soufre, ou les groupes alkylamino.

16. Un matériau d'argile particulaire selon l'une quelconque des revendications 13 à 15, dans lequel la partie basique du composé organique comprend un ou plusieurs groupes amine primaire $NH_2$.

17. Un matériau d'argile particulaire selon la revendication 13, dans lequel le composé organique est choisi parmi l'alkylamine de suif hydrogéné, les mono-amines organiques, les polyamines organiques, la mélamine et les dérivés de ceux-ci, dans lequel la partie organique porte au moins un groupe substituant fonctionnel qui peut interagir favorablement avec un polymère chargé en utilisant le matériau dans lequel l'au moins un groupe substituant fonctionnel est choisi parmi les groupes amide ou polyamide, les groupes carboxyle, les groupes vinyle, les groupes mercapto ou autres groupes contenant du soufre, ou les groupes alkylamino.

18. Un matériau d'argile particulaire selon l'une quelconque des revendications 13 à 17, sous forme de particules sensiblement sèches.

**19.** Un matériau d'argile particulaire selon l'une quelconque des revendications 13 à 18, dans lequel l'argile est choisie parmi le kaolin hydraté, le kaolin partiellement calciné (métakaolin), le kaolin entièrement calciné, l'argile plastique, le talc, le mica et l'une quelconque des combinaisons de ceux-ci.

**20.** Un procédé de préparation d'une matière argileuse particulaire selon l'une quelconque des revendications 13 à 19, comprenant la mise en contact d'une argile particulaire qui n'est pas modifiée en surface avec le ou les composés organiques avec une quantité suffisante du ou des composés organiques dans des conditions selon lesquels ledit ou lesdits composés organiques s'associent aux particules de l'argile particulaire pour modifier en surface celles-ci.

**21.** Une composition polymère comprenant un polymère et une charge d'argile particulaire distribuée dans la composition polymère, dans laquelle la charge d'argile particulaire est un matériau selon l'une quelconque des revendications 13 à 19.

**22.** Une composition polymère selon la revendication 21, dans laquelle le polymère est un polymère thermoplastique.

**23.** Une composition polymère selon la revendication 21 ou 22, qui est une composition polymère ignifuge.

**24.** Une composition polymère selon l'une quelconque des revendications 21 à 23, dans laquelle la charge d'argile particulaire est présente dans la composition polymère à un nombre de particules par volume unitaire d'au moins 1 particule par 100 $\mu$m$^3$.

**25.** Une composition polymère selon l'une quelconque des revendications 21 à 24, dans laquelle la charge d'argile est présente dans la composition polymère entre 5 et 200 parties en poids pour cent de polymère, ou dans laquelle la charge d'argile est présente dans la composition polymère entre 5 et 100 parties en poids pour cent de polymère, ou dans laquelle la charge d'argile est présente entre 10 et 50 parties en poids pour cent de polymère, ou dans laquelle la charge d'argile est présente dans la plage comprise entre 20 et 40 parties en poids pour cent de polymère.

**26.** Une composition polymère selon l'une quelconque des revendications 21 à 25, comprenant un ou plusieurs autres composants choisis parmi un ou plusieurs composants ignifuges classiques, un ou plusieurs composants non ignifuges classiques et les deux.

**27.** Une composition polymère selon la revendication 26, dans laquelle le composant ignifuge classique est choisi parmi les composés contenant du phosphore, les composés contenant du bore, les sels métalliques, les hydroxydes métalliques, les oxydes métalliques, les hydrates de ceux-ci, les argiles organiques, les hydrocarbures halogénés et l'une quelconque des combinaisons de ceux-ci, ou dans laquelle le composant ignifuge classique comprend du trihydrate d'alumine (ATH).

**28.** Une composition polymère selon l'une quelconque des revendications 26 à 27, dans laquelle le composant non ignifuge classique est choisi parmi les pigments, les colorants, les antidégradants, les antioxydants, les modificateurs d'impact, les charges inertes, les agents glissants, les agents antistatiques, les huiles minérales, les stabilisants, les améliorateurs d'écoulement, les agents démoulants, les agents de nucléation, les agents de clarification et l'une quelconque des combinaisons de ceux-ci.

**29.** Un matériau de charge particulaire pour une composition polymère ignifuge, le matériau de charge comprenant un mélange d'une argile particulaire et d'un ou plusieurs autres ignifuges particulaires, dans lequel l'argile particulaire est un matériau selon l'une quelconque des revendications 13 à 19, par exemple dans lequel le ou plusieurs autres ignifuges particulaires comprend le trihydrate d'alumine (ATH).

**30.** Un procédé de formation d'une composition polymère selon l'une quelconque des revendications 21 à 28, comprenant le mélange d'un polymère solide liquide ou particulaire ou d'un ou plusieurs des précurseurs de celui-ci avec un matériau selon l'une quelconque des revendications 13 à 19 et tout autre composant souhaité, et - si un ou plusieurs précurseurs du composant polymère sont présents - le durcissement ultérieur du mélange.

**31.** Un mélange d'un polymère solide liquide ou particulaire ou d'un ou plusieurs des précurseurs de celui-ci et d'un matériau d'argile particulaire selon l'une quelconque des revendications 13 à 19 et éventuellement tout autre composant d'une composition polymère comme souhaité, pour traitement ultérieur pour former une composition polymère selon l'une quelconque des revendications 21 à 28.

**32.** Un article formé à partir d'une composition polymère ignifuge selon l'une quelconque des revendications 21 à 28.

**33.** Une gaine, un revêtement ou un boîtier pour un produit électrique, formé à partir d'une composition polymère selon l'une quelconque des revendications 21 à 28.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9943747 A
- US 4582866 A
- US 5946309 A
- US 4960816 A
- WO 8800608 A1
- GB 1251277 A
- US 3628738 A
- EP 1090954 A1
- GB 2240398 A
- US 5128606 A
- EP 0528078 A

**Non-patent literature cited in the description**

- **JENNINGS et al.** Particle size measurement: the equivalent spherical diameter. *Proc. R. Soc. Lond.,* 1988, vol. A419, 137-149